# EUROPEAN PATENT SPECIFICATION

(11) **EP 3 524 106 B1**
(45) Date of publication and mention of the grant of the patent: **14.10.2020**
(21) Application number: 19156315.4
(22) Date of filing: 08.02.2019
(51) Int. Cl.: A47J 37/10

(54) **SPLATTER SCREEN**
SPRITZSIEB
ÉCRAN ANTI-ÉCLABOUSSURES

(30) Priority: 09.02.2018 BE 201805078
(43) Date of publication of application: 14.08.2019
(73) Proprietor: I.C.B. NV, 3271 Scherpenheuvel-Zichem (BE)
(72) Inventor: BERGEN, Johan, 3271 Averbode (BE)
(74) Representative: IPLodge bv

(56) References cited:
- WO-A1-2009/062555
- WO-A1-2009/146496
- DE-U1-202012 002 086
- GB-A- 2 538 489
- KR-B1- 100 905 036
- US-A1- 2015 104 555
- US-A1- 2015 144 637
- US-A1- 2015 182 069

## Description

The present invention relates to cookware or cooking utensils, especially a device called a spatter screen or guard or splatter screen or guard. In one aspect the present invention relates to a re-usable rather than a disposable spatter screen or guard or splatter screen or guard. More particularly, the present invention relates to a flexible, re-usable spatter screen or guard or splatter screen or guard comprising a heat and flame resistant, non-absorbent, non-metallic material with excellent wet strength and which is easy to position and to remove as well as having a shape that conveniently conforms or can be cut or stamped to conform to the shape of a wide variety of cooking vessels.

### Background of the invention

During cooking of food using a frying pan, spattering of grease, fat or oil can splatter at high temperatures. Besides fouling the area around the cooking stove, there is a burn risk for the cook or other persons in the vicinity. During use, the spatter screen is placed loosely on top of a frying pan to prevent spatter from the pan. To block such spattering, it is known to use a splatter or spatter screen or guard made from a mesh with holes that allows steam and heat to dissipate selectively.

US patent No. 3,807,596 describes a splatter screen which has a circular metallic rim, a handle attached to the rim, and an aluminium screen retained within the rim. The metallic rim can heat up which adds the risk of contact burns. Moreover, with a fixed rim, storage space is required. The document US 2015/0144637 A1 discloses a further splatter shield.

US2008/272124 describes a spatter screen comprising: a screen element with at least one planar surface formed of heat-resistant, silicone rubber; a rim about said screen element; a handle extending from the rim; with the screen element being integrally formed of heat-resistant, silicone rubber; with a plurality of cylindrical walls formed in the screen element to create perforations; with the screen element including a plurality of ribs, the ribs having a depth perpendicular to the screen element surface to space the screen element surface away from a plane formed by edges of the ribs; with the ribs being longitudinal and extending in directions from a center of the screen element surface towards the rim; with the screen element surface being circular and the ribs being radial in orientation; with the ribs extending from a medial portion of the screen element surface to the rim; with a plurality of feet having a depth perpendicular to the screen element surface to space the plane formed by edges of the ribs away from a plane formed by edges of the feet; and with the feet extending from the rim, the rim being circular, and with the feet being arcuate.

US patent No. 7,414,229, US patent No. 7,586,068 and US patent No. 7,717,285 all teach splatter guards made out of breathable paper that are located around a vessel while being heated in a microwave oven. The configurations and materials of these utensils render them disposable and capable of keeping the top and side surfaces of the inside of a microwave oven secure from splatter. However, they are not suitable for use on gas burners or other table top heating devices such as grills or for oven use.

### Summary of the invention

In one aspect the present invention relates to prevention of splatter or spatter of grease and cooking liquids and to prevent boil-over when used in conjunction with a wide variety of cooking vessels and cooking methods, e.g. grilling, including, but not limited to pots and pans such as frying pans, glass, plastic or ceramic vessels for use in microwave heating and cooking, casserole dishes, and other types of pans for use in oven cooking. More particularly, the present invention relates to a re-usable spatter screen comprising a flexible, non-metallic, cleanable mesh material. Preferably the material is heat and flame resistant, e.g. to be used with cooking utensils. The material is preferably non-absorbent. The material is preferably of sufficient flexibility and wet strength to render it easily manipulated. The spatter screen has at least one handle formed integrally with the mesh, e.g. from the same material. The one or more optional handles are preferably located on the circumference of the splatter screen, i.e. on the circumference of the mesh material. Further optional handles can be arranged around the circumference, e.g. equally spaced. Preferably, the splatter screen can be formed from a homogeneous sheet of material. As an optional alternative, at least one handle is formed separately from the rest of the splatter screen and is attached to an edge of the splatter screen by welding, adhesive or by mechanical fasteners. As an alternative, a laminated structure can be used where either or both surfaces of the splatter screen are formed from thin sheets of a permeable, non-absorbent material and one sheet is made of a permeable material which confers some rigidity to the structure. The optional handles are preferably placed to the side of the screen or guard further away from the source of heat. Also or alternatively, the handles can be placed optionally on the top, e.g. in the middle, of the screen or guard. The handles (if used) provide easy placement and removal.

A splatter screen according to any of the embodiments of the present invention is frameless. Embodiments of the present invention are easy to position and to remove having a shape that conveniently conforms or can be cut to confirm to the shape of a wide variety of cooking vessels.

By way of example, the present invention not being limited thereto, the splatter screen may comprise a mesh material. The mesh material may be made from a glass fiber or glass fibers whereby the thickness of the glass fibers used is preferably between 0.2 mm and 0.7 mm. The mesh is preferably a glass fibre based mesh or grating which may be coated with an anti-sticking material. The anti-sticking material may be a fluoropolymer. The fluoropolymer may be any of a polytetrafluoroethylene (PTFE), fluorinated ethylene propylene (FEP) or perfluoroalkoxy (PFA).

The splatter screen according to any of the embodiments of the present invention may be operated at temperatures between 0°C and 280°C or higher, e.g. for a cooking, baking or grilling process. A splatter screen according to embodiments of the present invention can be used for preparing food whereby temperature peaks up to 320°C may occur. It is also an advantage of embodiments according to the present invention that the splatter screen is resistant to short exposures to flames.

The splatter screen according to embodiments of the present invention can comprise at least a central portion comprising a glass fibre based mesh or any flexible heat resistant material such as Kevlar.

The splatter screen is advantageously made of a food grade material and may be conform with hygienic standards such as for example the FDA standard or the European standard regarding food preparation.

The mesh or grating may be a mesh made by warp knitting, braiding or weaving. The mesh material may be made of a glass fiber whereby the thickness of the glass fibers used can be between 0.2 mm and 0.7 mm. The mesh may be a woven mesh. The woven mesh may be made by leno weaving.

The mesh or grating has mesh openings allowing air and steam circulation but preventing or reducing spatter or splatter of grease, oil or fat. The mesh openings has a surface 1 of 1 x 1 mm². The density of the grating or mesh may be between 200g and 1200g/m².

In the embodiments of the present invention in which the splatter screen optionally has one or more handles, the handles can be made of the same material as the mesh, and hence the handles have a low conductivity for heat and, hence, there is a reduced contact burn risk.

The nonstick FDA-grade splatter screen according to embodiments of the present invention has one or more or all of the following technical advantages:
It is based for example on fiber mesh/fluoro polymer which is heat and flame resistant, robust, inert and light in weight.

The splatter screen and the optional handles thereof according to embodiments of the present invention are not reinforced with metal rods but are frameless and fully flexible which allows the screen to be stored in small places.

The splatter screen according to embodiments of the present invention have many uses, e.g. to cover all sorts of pots and pans such as used for skillets and woks.

The splatter screen according to embodiments of the present invention are odour and stain resistant which means they can be re-used, hence there is no need to dispose of them.

The splatter screen and the optional handles thereof according to embodiments of the present invention are suitable for use in electric or gas ovens, microwave ovens and can be cleaned by hand or in a dishwasher safely.

The splatter screen according to embodiments of the present invention are particularly suitable for frying and sauteing and can reduce or prevent soiling of a domestic or professional kitchen.

The splatter screen and the optional handles thereof according to embodiments of the present invention are light in weight and easy to store.

The splatter screen according to some embodiments of the present invention optionally has one or more handles which keep fingers away from heat guide hot fat, grease and oil away from the fingers as the handle or handles is/are raised.

### Brief description of the drawings

Figures 1 and 2 show a splatter screen in accordance with an embodiment of the present invention.
Figure 3 shows how a splatter screen in accordance with an embodiment of the present invention can be positioned on a cooking vessel.
Figure 4 shows how a splatter screen in accordance with an embodiment of the present invention can be removed safely from on a cooking vessel.

### Disclosure of the preferred embodiments

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The following terms are provided solely to aid in the understanding of the invention. Where in the present application reference is made to "splatter screen" or to "cover system" any type of device is included that reduces or avoids cooking splatters independently of the shape, model, colour or size.

A splatter screen in accordance with any of the embodiments of the present invention is made of a non-absorbent yet permeable, poorly thermally conductive, non-metallic material that is versatile enough to be used in a multitude of different cooking environments and can be dimensioned so as to fit a wide variety of cooking vessel shapes and sizes. The splatter screen can be configured and dimensioned so as to conform to the shape and dimensions of the cooking vessel with which it is to be used. A splatter screen according to any of the embodiments of the present invention can be dimensioned, e.g. cut or stamped, in such a way as to rest on the rim of or inside the cooking pot or pan. The material from which the splatter screen is made, is minimally heat conductive so as to be safely and comfortably handled when repositioning or otherwise manipulating the splatter screen during cooking. Being non-absorbent, when the splatter screen is allowed to rest directly above the food being cooked, no or minimal fluid and grease absorption occurs, making it suitable for frying or similar operations.

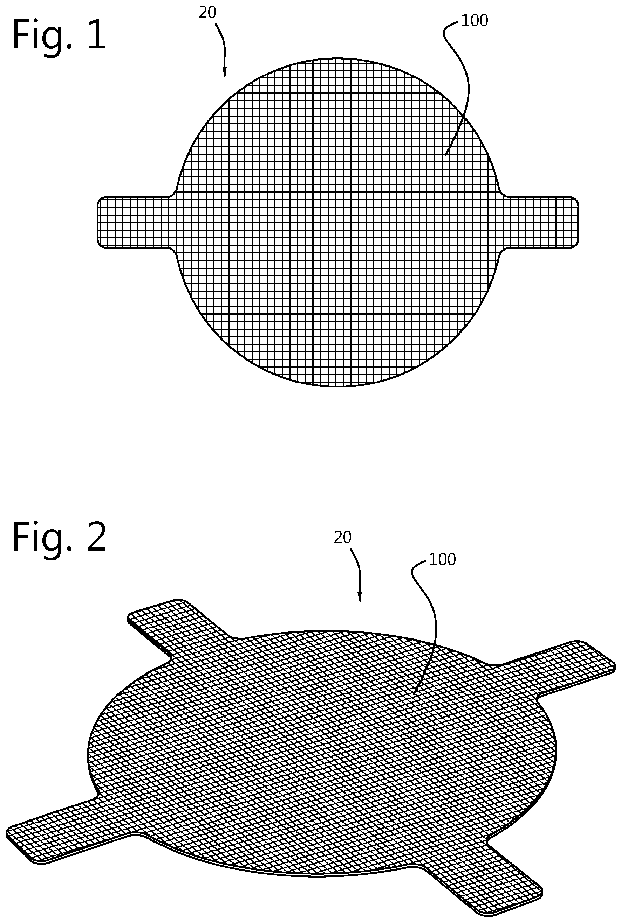

The splatter screen can be without handles or can optionally comprise handles. Referring to Figures 1 to 4, a splatter screen 20 is made of a flat planar, flexible, heat and flame resistant, non-absorbent, non-metallic, cleanable/washable mesh 100. The splatter screen shown in these figures has optionally handles. In such a case the splatter screen has at least one and preferably two or more, such as three, four, five or six, handles that are integral with the mesh 100, i.e. made from the same material. Figure 1 shows two handles and Figure 2 shows four handles. One handle is possible as well as three or more handles. The one or more handles are preferably located on the circumference of the splatter screen, i.e. on the circumference of the mesh material. Further handles can be arranged around the circumference, e.g. equally spaced. As an alternative, at least one handle is formed separately from the rest of the splatter screen and is attached to an edge of the splatter screen by welding, adhesive or by mechanical fasteners.

The splatter screen 20 advantageously is made of a food grade material and may be conform with hygienic standards such as for example the FDA standard or the European standard regarding food preparation.

Preferably, the splatter screen 20 can be formed from a single homogeneous sheet of material, with or without handles.

As an alternative, the handles may be sown onto a piece of mesh.

In advantageous embodiments, the mesh or grating 100 is such that it allows for air and steam circulation through the splatter screen 20. The latter results in an improved baking process and the handling is easy. The mesh or grating 100 are provided with mesh or grating openings, whereby the surface area of an individual mesh or grating opening is 1 x 1 mm². The shape of the mesh or grating openings can be square or may have any other shape, such as for example rectangular, circular, oval etc. The orientation of the mesh or grating openings may be in any suitable direction. It is an advantage of embodiments according to the present invention that these prevent splatters and more specifically allow air or steam to escape. A liquid can be added through the mesh or grating openings due to the size of the openings, while still allowing air flow. The screen can be used on both sides. The latter may advantageously allow to follow the cooking process visually through the mesh openings.

By way of example, the present invention not being limited thereto, the splatter screen may be made by warp knitting, braiding or weaving. The splatter screen may comprise a mesh such as a woven mesh. The splatter screen may comprise a mesh made of glass fibers, whereby the thickness of the glass fibers used is between 0.2 mm and 0.7mm. The density of the mesh or grating may be between 150g/m² and 1200 g/m².

The mesh may be a woven mesh. One example, the present invention not being limited thereto, of producing the mesh may be using leno weaving. Leno weaving is a weaving process in which warp yarns are arranged in pairs. Two hardnesses may be required and two sets of warp, the ground yarns and the doup yarns may be used. The filing is shot straight across the fabric as in a plain weave, but the doup yarns are alternately moved in the right- and left-hand direction, crossing before each pick is inserted. The doup yarns are attached to a special harness called a doup harness that is manipulated to move them from one side of the ground yarns to the other. This weave gives firmness and strength to an open weave cloth, preventing slipping and displacements of warp and filling yarns.

In advantageous embodiments, the mesh or grating of the splatter screen may be coated with an anti-sticking material, such as for example a fluoropolymer or synthetic fluoropolymer. The anti-sticking material may be for example any of polytetrafluoroethylene (PTFE), fluorinated ethylene propylene (FEP) or perfluoroalkoxy (PFA), better known as Teflon® distributed by Chemours. The latter provides the advantage that the splatters does not stick to the screen. The anti-sticking material may be applied to the whole mesh or grating.

The splatter screen 100 can be cleaned easily e.g. by hand or in the dishwasher.

It is an advantage of embodiments according to the present invention that the splatter screen re-used a number of times.

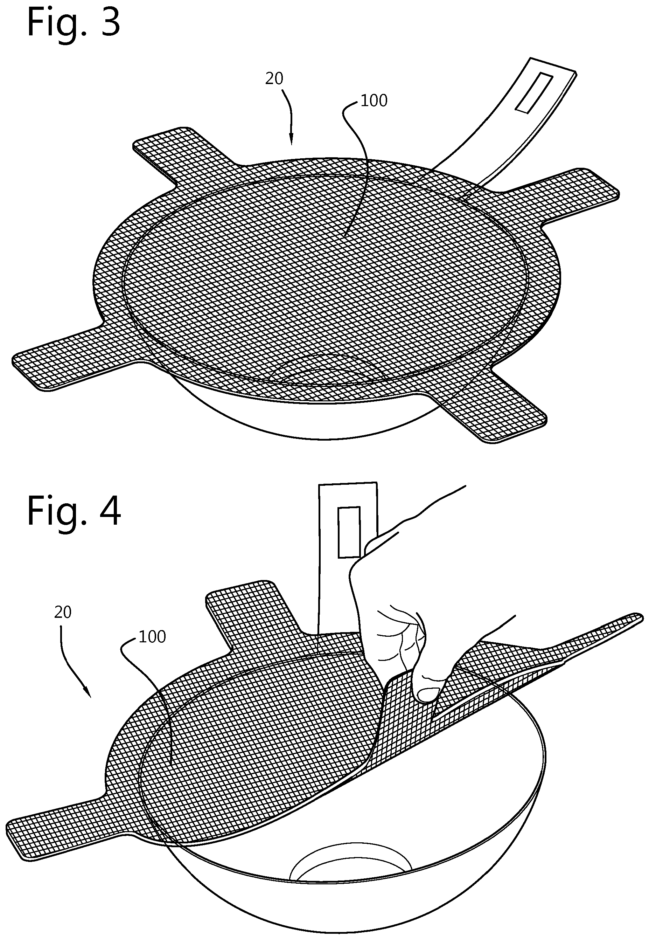

The splatter screen may be made in a plurality of colors, shapes and models, none of them being limiting for the present invention. The size of the splatter screen is preferably bigger than the pots or pans it is to cover - see Figure 3. It is an advantage according to embodiments of the present invention that the splatter screen 100 can be easily given an appropriate size, e.g. by cutting with a knife or using scissors or in any other suitable way.

It is an advantage of embodiments according to the present invention that the splatter screen 100, even during use, is cool to the touch, e.g. burn-proof with respect to the user, as it made of a low-heat-conductive material, in contrast to metal screens. In other words, a user may remove the splatter screen by picking it up, without the risk of burning during the manipulation - see Figure 4. A particular advantage of the splatter screen in accordance with embodiments of the present invention is that it is flexible. Since the splatter screen has one or more handles, its flexibility is such that when a handle is raised, the splatter screen is curved down towards its center, which means that any hot fat, grease or oil will run away from the hand of the user, i.e. does not run towards the hand of the user but away into the cooking vessel. The splatter screen takes up the shape of a catenary under its own weight. This is a significant advantage of embodiments of the present invention.

Furthermore, the splatter screen can be used in any conventional oven or also micro-wave ovens. Due to the flat structure of the woven mesh the splatter screen can easily be stored flat or rolled up thereby taking up very limited space.

## Claims

1. A re-usable, non-absorbent splatter screen adapted for being placed on a cooking vessel and comprising a non-metallic flexible mesh material, **characterized by** the mesh material being made by warp knitting, braiding, or weaving, and wherein the mesh material is a glass fiber or Kevlar mesh or grating whereby the thickness of the glass fibers used is between 0.2 mm and 0.7 mm and whereby the mesh openings have a surface of 1 x 1 mm² to allow air and steam circulation while preventing or reducing splatter of grease, oil or fat; the splatter screen further comprising at least one handle formed integrally with the mesh material, and wherein, in operation on a cooking vessel, the raising of at least one handle by a user results in the splatter screen being curved from the at least one handle down to a central region of the splatter screen allowing any oil, grease or fat to drain away into the cooking vessel.

2. A re-usable, non-absorbent splatter screen according to claim 1, which splatter screen takes up the shape of a catenary under its own weight.

3. The re-usable, non-absorbent splatter screen according to claim 1 or 2, wherein the mesh material is made by leno weaving.

4. The re-usable, non-absorbent splatter screen according to any previous claim, formed from of a single sheet of the mesh material.

5. The re-usable, non-absorbent splatter screen according to any of the claims 1 to 3, in which the at least one handle is formed separately from the rest of the splatter screen and is attached to an edge of the splatter screen by welding, adhesive or by mechanical fasteners.

6. The re-usable, non-absorbent splatter screen according to any previous claim, treated with a non-stick coating material.

7. The re-usable, non-absorbent splatter screen according to claim 6, wherein the mesh material is coated with a fluoropolymer or synthetic fluoropolymer.

8. The re-usable, non-absorbent splatter screen according to claim 6, wherein the non-stick coating material is any of polytetrafluoroethylene (PTFE), fluorinated ethylene propylene (FEP), perfluoroalkoxy (PFA) or silicone.

9. The re-usable, non-absorbent splatter screen according to claim 6 or 8 wherein the non-stick material is applied to the whole mesh.

10. The re-usable, non-absorbent splatter screen according to any previous claim, wherein the mesh material is a woven glass fiber mesh.

11. The re-usable, non-absorbent splatter screen according to any previous claim, wherein the density of the mesh material is between 150g/m²and 1200 g/m².

12. The re-usable, non-absorbent splatter screen according to any previous claim, wherein the mesh material is flame and heat resistant.

13. Use of the splatter screen of any of the claims 1 to 12, on a cooking vessel.

14. Use of the splatter screen according to claim 13, wherein the raising of at least one handle by a user results in the splatter screen being curved from the at least one handle down to a central region of the splatter screen allowing any oil, grease or fat to drain away from the hand of the user.

## Patentansprüche

1. Wiederverwendbarer, nicht absorbierender Spritzschutz, der zum Aufsetzen auf und über ein Kochgefäß geeignet ist und ein nichtmetallisches flexibles Netzmaterial umfasst, **dadurch gekennzeichnet, dass** das Netzmaterial durch Kettstricken, Flechten oder Weben hergestellt wird, und wobei das Netzmaterial ein Glasfaser- oder ein Kevlar-Netz oder -Gitter ist, wobei die Dicke der verwendeten Glasfasern zwischen 0,2 mm und 0,7 mm liegt und wobei die Netzöffnungen eine Fläche von 1 x 1 mm² aufweisen, um Luft- und Dampfzirkulation zu ermöglichen und gleichzeitig das Verspritzen von Schmierstoff, Öl oder Fett zu verhindern oder zu verringern; wobei der Spritzschutz ferner mindestens einen Griff umfasst, der integral mit dem Netzmaterial ausgebildet ist, und wobei im Betrieb auf einem Kochgefäß das Anheben mindestens eines Griffs durch einen Benutzer dazu führt, dass der Spritzschutz von dem mindestens einen Griff zu einem zentralen Bereich des Spritzschutzes nach unten gekrümmt wird, damit Öl, Schmierstoff oder Fett in das Kochgefäß abfließen können.

2. Wiederverwendbarer, nicht absorbierender Spritzschutz nach Anspruch 1, wobei der Spritzschutz unter seinem eigenen Gewicht die Form einer Kettenoberleitung annimmt.

3. Wiederverwendbarer, nicht absorbierender Spritzschutz nach Anspruch 1 oder 2, wobei das Netzmaterial durch Leno-Weben hergestellt wird.

4. Wiederverwendbarer, nicht absorbierender Spritzschutz nach einem der vorhergehenden Ansprüche, der aus einer einzelnen Folie des Netzmaterials gebildet ist.

5. Wiederverwendbarer, nicht absorbierender Spritzschutz nach einem der Ansprüche 1 bis 3, bei dem der mindestens eine Griff getrennt vom Rest des Spritzschutzes gebildet ist und durch Schweißen, Klebstoff oder mechanische Befestigungselemente an einer Kante des Spritzschutzes befestigt ist.

6. Wiederverwendbarer, nicht absorbierender Spritzschutz nach einem der vorhergehenden Ansprüche, behandelt mit einem Antihaftbeschichtungsmaterial.

7. Wiederverwendbarer, nicht absorbierender Spritzschutz nach Anspruch 6, wobei das Netzmaterial mit einem Fluorpolymer oder synthetischem Fluorpolymer beschichtet ist.

8. Wiederverwendbarer, nicht absorbierender Spritzschutz nach Anspruch 6, wobei das Antihaftbeschichtungsmaterial eines aus Polytetrafluorethylen (PTFE), fluoriertem Ethylenpropylen (FEP), Perfluoralkoxy (PFA) oder Silikon ist.

9. Wiederverwendbarer, nicht absorbierender Spritzschutz nach Anspruch 6 oder 8, wobei das Antihaftmaterial auf dem gesamten Netz aufgebracht wird.

10. Wiederverwendbarer, nicht absorbierender Spritzschutz nach einem der vorhergehenden Ansprüche, wobei das Netzmaterial ein gewebtes Glasfasernetz ist.

11. Wiederverwendbarer, nicht absorbierender Spritzschutz nach einem der vorhergehenden Ansprüche, wobei die Dichte des Netzmaterials zwischen 150 g/m² und 1200 g/m² liegt.

12. Wiederverwendbarer, nicht absorbierender Spritzschutz nach einem der vorhergehenden Ansprüche, wobei das Netzmaterial flamm- und hitzebeständig ist.

13. Verwendung des Spritzschutzes nach einem der Ansprüche 1 bis 12 auf einem Kochgefäß.

14. Verwendung des Spritzschutzes nach Anspruch 13, wobei das Anheben mindestens eines Griffs durch einen Benutzer dazu führt, dass der Spritzschutz vom mindestens einen Griff bis zu einem zentralen Bereich des Spritzschutzes gekrümmt wird, wodurch jegliches Öl, Schmierstoff oder Fett von der Hand des Benutzers weg abtropfen kann.

## Revendications

1. Écran anti-éclaboussures réutilisable non absorbant conçu pour être placé sur un récipient de cuisson et comprenant une matière maillée souple non métallique, **caractérisé en ce que** la matière maillée est faite par tricotage chaîne, tressage, ou tissage, et dans lequel la matière maillée est une fibre de verre ou un maillage ou une grille de Kevlar de sorte que l'épaisseur des fibres de verre utilisées est entre 0,2 mm et 0,7 mm et de sorte que les ouvertures de maille ont une surface de 1 x 1 mm² pour permettre la circulation d'air et de vapeur tout en empêchant ou en réduisant des éclaboussures de graisse, d'huile ou de gras ;
l'écran anti-éclaboussures comprenant en outre au moins une poignée formée d'un seul tenant avec la matière maillée, et dans lequel, en fonction sur un récipient de cuisson, le levage d'au moins une poignée par un utilisateur aboutit à ce que l'écran anti-éclaboussure s'incurve à partir de l'au moins une poignée vers le bas jusqu'à une région centrale de l'écran anti-éclaboussures permettant à une quelconque huile, graisse ou gras de s'écouler dans le récipient de cuisson.

2. Écran anti-éclaboussures réutilisable non absorbant selon la revendication 1, lequel écran anti-éclaboussures prend la forme d'une caténaire sous son propre poids.

3. Écran anti-éclaboussures réutilisable non absorbant selon la revendication 1 ou 2, dans lequel la matière maillée est faite par tissage léno.

4. Écran anti-éclaboussures réutilisable non absorbant selon l'une quelconque des revendications précédentes, formé à partir d'une seule feuille de la matière maillée.

5. Écran anti-éclaboussures réutilisable non absorbant selon l'une quelconque des revendications 1 à 3, dans lequel l'au moins une poignée est formée séparément du reste de l'écran anti-éclaboussures et est attachée à un bord de l'écran anti-éclaboussures par soudage, adhésif ou par des attaches mécaniques.

6. Écran anti-éclaboussures réutilisable non absorbant selon l'une quelconque des revendications précédentes, traité avec une matière de revêtement antiadhérent.

7. Écran anti-éclaboussures réutilisable non absorbant selon la revendication 6, dans lequel la matière maillée est revêtue d'un fluoropolymère ou d'un fluoropolymère synthétique.

8. Écran anti-éclaboussures réutilisable non absorbant selon la revendication 6, dans lequel la matière de revêtement antiadhérent est l'une quelconque de polytétrafluoréthylène (PTFE), d'éthylène-propylène fluoré (FEP), de perfluoroalkoxy (PFA) ou de silicone.

9. Écran anti-éclaboussures réutilisable non absorbant selon la revendication 6 ou 8, dans lequel la matière antiadhérente est appliquée à tout le maillage.

10. Écran anti-éclaboussures réutilisable non absorbant selon l'une quelconque des revendications précédentes, dans lequel la matière maillée est un maillage de fibres de verre tissées.

11. Écran anti-éclaboussures réutilisable non absorbant selon l'une quelconque des revendications précédentes, dans lequel la densité de la matière maillée est entre 150 g/m² et 1200 g/m².

12. Écran anti-éclaboussures réutilisable non absorbant selon l'une quelconque des revendications précédentes, dans lequel la matière maillée est résistante au feu et à de la chaleur.

13. Utilisation de l'écran anti-éclaboussures selon l'une quelconque des revendications 1 à 12, sur un récipient de cuisson.

14. Utilisation de l'écran anti-éclaboussures selon la revendication 13, dans lequel le levage d'au moins une poignée par un utilisateur aboutit à ce que l'écran anti-éclaboussures s'incurve à partir de l'au moins une poignée vers le bas jusqu'à une région centrale de l'écran anti-éclaboussures permettant à une quelconque huile, graisse ou gras de s'écouler à partir de la main de l'utilisateur.
